# DEMANDE DE BREVET EUROPEEN

(11) **EP 3 835 282 A1**
(43) Date de publication de la demande: **16.06.2021**
(21) Numéro de dépôt: 20212372.5
(22) Date de dépôt: 08.12.2020
(51) Int. Cl.: C04B 41/89, A47G 19/02, C03C 8/02

(54) **ARTICLE COMPORTANT UNE BASE AU MOINS PARTIELLEMENT EN PORCELAINE, UN DÉCOR ET UN AMORTISSEUR DE GRADIENT DE DILATATION THERMIQUE ET PROCÉDÉ DE FABRICATION D'UN TEL ARTICLE**

(30) Priorité: 12.12.2019 FR 1914315
(71) Demandeur: Compagnie des Arts de la Table et de l'Email, 24300 Nontron (FR)
(72) Inventeur: QUEREL, Gilles, 16410 GARAT (FR); CHEVIOT, Maureen, 16410 SERS (FR); BOUDET MARTIN, Céline, 24300 PIEGUT PLUVIERS (FR)
(74) Mandataire: Santarelli

(57) **Abrégé**

La présente demande concerne un article (1) comportant une base (2) et un décor (3) comportant une couleur céramique (7) et une couverte (8), ladite base (2) ayant un premier coefficient de dilatation thermique, la dite couleur céramique (7) ayant un deuxième coefficient de dilatation thermique, le premier coefficient de dilatation thermique étant inférieur au deuxième coefficient de dilatation thermique, l'article (1) étant caractérisé en ce qu'il comporte en outre un amortisseur de gradient de dilatation thermique (4) disposé au moins en partie entre ladite base (2) et ladite couleur céramique (7), ledit amortisseur de gradient de dilatation thermique (4) ayant un troisième coefficient de dilatation thermique, ce troisième coefficient de dilatation thermique étant compris entre le premier coefficient de dilatation thermique et le deuxième coefficient de dilatation thermique. Elle concerne également sur un procédé de fabrication d'un tel article (1).

## Description

### Domaine technique de l'invention

L'invention concerne un article comportant une base au moins partiellement en céramique, et plus particulièrement en porcelaine, et un décor, notamment dans le domaine des arts de la table, par exemple une assiette, une tasse, un saladier ou autre.

L'invention concerne également un procédé de fabrication d'un tel article.

### Etat de la technique

On connaît des articles comportant une base et un décor, notamment dans le domaine des arts de la table et en particulier du type assiette, tasse, saladier ou autre.

Une telle base est par exemple en partie en céramique, et plus particulièrement en porcelaine, et est traditionnellement revêtue d'émail.

Le décor comporte souvent une couverte et des couleurs céramiques, par exemple des pigments céramiques mélangés à une fritte, les pigments comportant par exemple des oxydes métalliques.

Les couleurs céramiques comportent souvent des éléments tels que du plomb (Pb), du cadmium (Cd), du cobalt (Co), du chrome (Cr), du nickel (Ni), de l'arsenic (As), du manganèse (Mn), de l'aluminium (Al), du baryum (Ba), du fer (Fe), de l'or (Au), par exemple.

La couverte du décor est notamment configurée pour former une barrière de diffusion permettant de limiter un relargage de ces éléments, contenus dans les couleurs céramiques, vers des aliments et/ou des liquides en contact avec l'article au cours de son utilisation.

A cet effet, la couverte est traditionnellement formée à partir d'un mélange d'oxydes, de nitrates, de carbonates ou d'oxydes complexes, par exemple comportant : de l'oxyde de titane (TiO₂), de l'oxyde de calcium (CaO), de l'oxyde de magnésium (MgO), de l'oxyde de bore (B₂O₃), du dioxyde de silicium (SiO₂), de l'oxyde d'aluminium (Al₂O₃), de l'oxyde de potassium (K₂O), de l'oxyde de sodium (Na₂O), de l'oxyde de zinc (ZnO), de l'oxyde de zirconium (ZrO₂), de l'oxyde de baryum (BaO) ou encore de l'oxyde de bismuth (Bi₂O₃).

Malgré la présence de cette couverte, il a été constaté qu'une partie des éléments contenus dans les couleurs céramiques était libérée pendant l'utilisation de l'article.

### Exposé de l'invention

L'invention vise à fournir un article comportant une base au moins partiellement en céramique, en particulier en porcelaine, et un décor, notamment dans le domaine des arts de la table, par exemple une assiette, une tasse, un saladier ou autre, dans lequel le relargage d'éléments du décor est réduit.

L'invention a ainsi pour objet, sous un premier aspect, un article comportant une base au moins partiellement en porcelaine, et un décor comportant au moins une couleur céramique et une couverte, ladite base ayant un coefficient de dilatation thermique appelé premier coefficient de dilatation thermique, ladite couleur céramique ayant un coefficient de dilatation thermique appelé deuxième coefficient de dilatation thermique, le premier coefficient de dilatation thermique étant inférieur au deuxième coefficient de dilatation thermique, l'article étant caractérisé en ce qu'il comporte en outre un amortisseur de gradient de dilatation thermique disposé au moins en partie entre ladite base et ladite couleur céramique, ledit amortisseur de gradient de dilatation thermique ayant un coefficient de dilatation thermique appelé troisième coefficient de dilatation thermique, ce troisième coefficient de dilatation thermique étant compris entre le premier coefficient de dilatation thermique et le deuxième coefficient de dilatation thermique, ledit amortisseur de gradient de dilatation thermique et ledit décor étant configurés pour limiter l'apparition de fissures dans au moins la couverte.

L'amortisseur de gradient de dilatation thermique présente un coefficient de dilatation thermique supérieur au coefficient de dilatation thermique de la base et inférieur au coefficient de dilatation thermique de la couleur céramique. Ainsi, cet amortisseur de gradient de dilatation thermique permet de diminuer le gradient de coefficient de dilatation thermique dans l'article et ainsi de réduire les contraintes thermomécaniques entre la base et le décor. Les contraintes thermomécaniques sont responsables de l'apparition de fissures dans le décor, et plus particulièrement dans la barrière de diffusion formée par la couverte.

L'amortisseur de gradient de dilatation thermique contribue ainsi à limiter des dégradations dans la couverte du décor et notamment les risques d'apparition de fissures, ou du moins leur taille, à savoir en particulier en largeur et/ou en profondeur.

En outre, l'amortisseur de gradient de dilatation thermique contribue à réduire des risques de tressaillage du décor.

De manière plus surprenante, il est apparu que l'amortisseur de gradient de dilatation thermique conduisait également à une diminution de la libération des éléments contenus dans l'au moins une couleur céramique lors d'expériences de contact alimentaire.

En particulier, il est apparu que les éléments contenus dans l'au moins une couleur céramique se libéraient de l'article en passant par les fissures qui peuvent se former dans le décor. Les fissures forment alors des chemins de diffusions des éléments des couleurs céramiques, vers les aliments ou liquides disposés sur le décor.

L'amortisseur de gradient de dilatation thermique contribuant à limiter l'apparition des fissures dans la couverte, en nombre et/ou en taille, il est également apparu qu'il contribuait à limiter la diffusion des éléments contenus dans les couleurs céramiques dans les aliments ou liquides disposés sur le décor.

Ainsi, la limitation de ces chemins de diffusions contribue à la diminution du relargage de ces éléments.

Dans un exemple particulier, le troisième coefficient de dilatation thermique, i.e. celui de l'amortisseur de gradient de dilatation thermique, est compris entre le premier coefficient de dilatation thermique et un coefficient de dilatation thermique du décor.

Ici, les coefficients de dilatation thermique sont chacun mesurés entre 100°C et 300°C.

Des caractéristiques préférées particulièrement simples, commodes et économiques de l'article selon l'invention sont présentées ci-dessous, prises indépendamment ou en combinaison.

Dans un exemple de réalisation, l'au moins une couleur céramique est située entre la base et la couverte, en particulier entre l'amortisseur de gradient de dilatation thermique et la couverte.

Ainsi, de préférence, la couverte recouvre l'au moins une couleur céramique.

Dans un autre exemple de réalisation, ladite base est pourvue d'émail, l'émail étant disposé, au moins partiellement, entre la porcelaine et l'amortisseur de gradient de dilatation thermique.

Dans un exemple de réalisation particulier, le premier coefficient de dilatation thermique de la base est compris entre 3,0.10⁻⁶ K⁻¹ et 6,0.10⁻⁶ K⁻¹, de préférence entre 3,5.10⁻⁶ K⁻¹ et 5,0.10⁻⁶ K⁻¹.

Dans un exemple de réalisation, le deuxième coefficient de dilatation thermique de la couleur céramique est compris entre 5,0.10⁻⁶ K⁻¹ et 11,0.10⁻⁶ K⁻¹.

Dans un exemple de réalisation, le troisième coefficient de dilatation thermique est compris entre 4,5.10⁻⁶ K⁻¹ et 7,0.10⁻⁶ K⁻¹, voire entre 5,0.10⁻⁶ K⁻¹ et 6,5.10⁻⁶ K⁻¹.

Dans un exemple de réalisation avantageux, l'au moins une couleur céramique comporte un mélange d'une fritte et de pigments, et comporte au moins un élément parmi les suivants : plomb (Pb), cadmium (Ca), aluminium (Al), cobalt (Co), baryum (Ba), chrome (Cr), nickel (Ni), arsenic (As), manganèse (Mn), fer (Fe), or (Au), argent (Ag), vanadium (V), titane (Ti) et le cuivre (Cu).

Dans un exemple de réalisation, l'amortisseur de gradient de dilatation thermique comporte (les teneurs étant exprimées en pourcentage massique, noté « wt.% ») :
- de 10 à 30 wt.% d'oxyde de bore (B₂O₃) ;
- de 20 à 70 wt.% d'oxyde de silicium (SiO₂) ;
- de 1 à 10 wt.% d'oxyde d'aluminium (Al₂O₃) ;
- de 0 à 3 wt.% d'oxyde de titane (TiO₂) ;
- de 0 à 3 wt.% d'oxyde de calcium (CaO) ;
- de 0 à 2 wt.% d'oxyde de manganèse (MgO) ;
- de 0 à 8 wt.% d'oxyde de potassium (K₂O) ;
- de 0 à 8 wt.% d'oxyde de sodium (Na₂O) ;
- de 0 à 8 wt.% d'oxyde de zinc (ZnO) ;
- de 0 à 8 wt.% d'oxyde de zirconium (ZrO₂) ;
- de 0 à 5 wt.% d'oxyde de baryum (BaO) et
- de 0 à 5 wt.% d'oxyde de bismuth (Bi₂O₃).

De préférence, la somme de ces teneurs est égale à 100 wt.%.

Dans un exemple de réalisation, la couverte comporte (les teneurs étant exprimées en pourcentage massique, noté « wt.% ») :
- de 10 à 30 wt.% d'oxyde de bore (B₂O₃);
- de 20 à 70 wt.% d'oxyde de silicium (SiO₂) ;
- de 1 à 10 wt.% d'oxyde d'aluminium (Al₂O₃) ;
- de 0 à 3 wt.% d'oxyde de titane (TiO₂) ;
- de 0 à 3 wt.% d'oxyde de calcium (CaO) ;
- de 0 à 2 wt.% d'oxyde de manganèse (MgO) ;
- de 0 à 8 wt.% d'oxyde de potassium (K₂O) ;
- de 0 à 8 wt.% d'oxyde de sodium (Na₂O) ;
- de 0 à 8 wt.% d'oxyde de zinc (ZnO) ;
- de 0 à 8 wt.% d'oxyde de zirconium (ZrO₂) ;
- de 0 à 5 wt.% d'oxyde de baryum (BaO) ; et
- de 0 à 5 wt.% d'oxyde de bismuth (Bi₂O₃).

De préférence, la somme de ces teneurs est égale à 100 wt.%.

Selon un exemple privilégié, la teneur d'au moins l'un des oxydes de la couverte est différente de la teneur de l'oxyde de l'amortisseur de gradient de dilatation thermique.

Dans un exemple de réalisation, la teneur d'oxyde de silicium (SiO₂) dans l'amortisseur de gradient de dilatation thermique est inférieure à la teneur d'oxyde de silicium (SiO₂) dans la couverte.

Dans un exemple de réalisation, la teneur d'oxyde de bore (B₂O₃) dans l'amortisseur de gradient de dilatation thermique est supérieure à la teneur d'oxyde de bore (B₂O₃)dans la couverte.

Dans un exemple de réalisation, la teneur d'oxyde d'aluminium (Al₂O₃) dans l'amortisseur de gradient de dilatation thermique est supérieure à la teneur d'oxyde d'aluminium (Al₂O₃) dans la couverte.

Par exemple, la base comporte une épaisseur comprise entre 1 mm et 10 mm.

Par exemple, l'amortisseur de gradient de dilatation thermique comporte une épaisseur comprise entre 1 µm et 20 µm, préférentiellement entre 1 µm et 10 µm, voire entre 3 µm et 8 µm.

Par exemple, l'amortisseur de gradient de dilatation thermique et le décor comportent une épaisseur comprise entre 10 µm et 25 µm.

Par exemple, l'au moins une couleur céramique, c'est-à-dire une ou de toutes les couleurs céramiques s'il y en a plusieurs, comporte une épaisseur comprise entre 2 µm et 250 µm, préférentiellement entre 5 µm et 50 µm.

Par exemple, la couverte comporte une épaisseur comprise entre 1 µm et 20 µm, préférentiellement entre 1 µm et 10 µm, voire entre 3 µm et 8 µm.

L'invention a aussi pour objet, sous un second aspect, un procédé de fabrication d'un article, tel que décrit ci-dessus, comportant :
- une étape de fournir une base au moins partiellement en porcelaine ;
- une étape de fournir un décor comportant au moins une couleur céramique et une couverte ;
- une étape de fournir un amortisseur de gradient de dilatation thermique ; et
- une étape d'assembler la base, le décor et l'amortisseur de gradient de dilatation thermique, ledit amortisseur de gradient de dilatation thermique étant disposé au moins en partie entre ladite base et ladite couleur céramique,
   la base ayant un coefficient de dilatation thermique appelé premier coefficient de dilatation thermique,
   la couleur céramique ayant un coefficient de dilatation thermique appelé deuxième coefficient de dilatation thermique, le premier coefficient de dilatation thermique étant inférieur au deuxième coefficient de dilatation thermique,
   l'amortisseur de gradient de dilatation thermique ayant un coefficient de dilatation thermique appelé troisième coefficient de dilatation thermique, ce troisième coefficient de dilatation thermique étant compris entre le premier coefficient de dilatation thermique et le deuxième coefficient de dilatation thermique,
   l'amortisseur de gradient de dilatation thermique et le décor étant configurés pour limiter l'apparition de fissures dans au moins la couverte.

Un tel procédé permet ainsi de fabriquer facilement un article tel que décrit précédemment.

Dans un exemple de mise en œuvre particulier, le procédé comporte une sous-étape de cuisson de la base à une température comprise entre 1380°C et 1400°C, par exemple pour une durée de 20 à 24h.

Dans un autre exemple de mise en œuvre particulier, le procédé de fabrication comporte en outre une étape de former la base qui comporte une sous-étape de fournir la porcelaine et une sous-étape d'émailler la porcelaine, cette étape étant antérieure à l'étape de fournir la base.

Eventuellement, le procédé comporte une sous-étape de cuisson de la porcelaine à une température comprise entre 950°C et 1000°C.

Elle est ensuite recouverte d'émail, par exemple composé d'un mélange de silice, feldspath et de kaolin.

Dans encore un autre exemple de mise en œuvre particulier, le procédé de fabrication comporte en outre une étape de former le décor qui comporte au moins une sous-étape d'assemblage de la couverte et de l'au moins une couleur céramique.

Cette étape est antérieure à l'étape de fournir le décor.

Optionnellement, l'étape de former le décor comporte en outre une sous-étape d'assemblage de l'amortisseur de gradient de dilatation thermique avec la couverte et ladite couleur céramique.

Par exemple, la sous-étape d'assemblage d'au moins la couverte et de ladite couleur céramique, voire avec l'amortisseur de gradient de dilatation thermique, est réalisée par chromolithographie.

Par exemple, la chromolithographie comporte une étape de fournir un support papier, une étape d'apposition d'au moins un premier tissu comportant au moins une zone ajourée, c'est-à-dire par exemple une découpe, représentant un premier motif sur le support papier, et une étape d'application d'une première pâte sur le support papier, à travers la découpe du premier tissu.

Ainsi, le premier tissu forme un premier pochoir.

Puis, si besoin, la chromolithographie comporte une étape de retrait du premier tissu, une étape de séchage puis une étape d'apposition d'un deuxième tissu comportant au moins une découpe, ou zone ajourée, représentant un deuxième motif sur le support papier, alors préalablement enduit de la première pâte, et ensuite une étape d'application d'une deuxième pâte sur le support papier (enduit de la première pâte), à travers la découpe du deuxième tissu.

Il y va éventuellement de même pour une troisième pâte si besoin, voire ainsi de suite. Ce processus est possiblement répété pour l'ensemble des pâtes de couleurs nécessaires au motif final. Il peut y avoir un grand nombre de pâtes de couleur appliquées en raison de la complexité de certains motifs. Par exemple, 14 tissus différents avec 14 pâtes de couleurs différents, voire possiblement davantage.

La dernière pâte est de préférence celle comportant la couverte qui est déposée de manière homogène sur les couches de couleur.

Par exemple, la première pâte comporte l'au moins une couleur céramique et la dernière pâte comporte la couverte.

Ou par exemple, la première pâte comporte l'amortisseur de gradient de dilatation thermique, la deuxième pâte comporte l'au moins une couleur céramique et la troisième pâte comporte la couverte.

Optionnellement, le procédé de fabrication comporte en outre une étape d'application d'un revêtement polymérique de type acrylique sur la couche de couverte (covercoat).

Un tel revêtement polymérique est appliqué en dernière couche, sur la couverte, pour procurer une épaisseur suffisante pour être manipulé à l'ensemble des couches qui sont appliquées sur la base.

Cependant, ce revêtement polymérique est consumé pendant une cuisson de l'article et ne se retrouve donc pas sur le produit final.

De préférence, le procédé comporte une étape de séchage du papier et de l'au moins une couche de pâte appliquée dessus. Il y a par exemple un séchage entre chaque couche qui permet d'évaporer un solvant présent dans la pâte correspondante.

Ensuite, une fois sec, le papier (enduit) est placé dans un bain d'eau.

Le « chromo », c'est-à-dire l'ensemble des couches de polymère/pâtes sèches, se détache et peut être manipulé.

Le chromo est placé sur la base, par exemple l'article en porcelaine, l'eau est évacuée pour faire coller le chromo à la base et l'ajuster correctement.

Ainsi, dans un exemple de mise en œuvre particulier, le procédé comporte une étape de séchage en étuve.

Ensuite l'article est par exemple mis dans un tunnel de chauffe à 700-900°C pendant 2h (gradient de température).

Le polymère (acrylique) se consume et l'ensemble formé par la fritte, la couverte et l'amortisseur fond et adhère à la surface de la base.

Ainsi, dans un exemple de mise en œuvre particulier, le procédé comporte une étape de cuisson de l'article à une température comprise entre 700°C et 900°C, par exemple à environ 880°C.

L'étape de cuisson a par exemple une durée comprise entre 1h30 et 2h30, et de préférence environ deux heures.

Dans un exemple de mise en œuvre particulier, l'étape de cuisson comporte une montée à 880°C en une dizaine de minutes puis un chauffage pendant 1h30-2h, puis un refroidissement.

### Brève description des figures

L'invention, selon un exemple de réalisation, sera bien comprise et ses avantages apparaitront mieux à la lecture de la description détaillée qui suit, donnée à titre indicatif et nullement limitatif, en référence aux dessins annexés dans lesquels :
[Fig 1] La figure 1 représente schématiquement une coupe d'un article selon un exemple de réalisation de l'invention, comportant une base, un décor et un amortisseur de gradient de dilatation thermique.
[Fig 2] La figure 2 représente schématiquement une coupe d'un article selon un autre exemple de réalisation de l'invention, comportant un décor formé de couleurs céramiques et d'une couverte, un amortisseur de gradient de dilatation thermique, et une base formée de porcelaine et d'émail.
[Fig 3] La figure 3 représente schématiquement des étapes d'un procédé de fabrication de l'article de la figure 1, selon un exemple de mise en œuvre de l'invention.
[Fig 4] La figure 4 représente schématiquement des étapes d'un procédé de fabrication de l'article de la figure 1, selon un autre exemple de mise en œuvre de l'invention.
[Fig 5] La figure 5 est une vue au microscope électronique à balayage d'une coupe d'un article sans amortisseur de gradient de dilatation thermique.
[Fig 6] La figure 6 est une vue au microscope électronique à balayage d'une coupe d'un article selon un exemple de réalisation de l'invention.

### Description détaillée

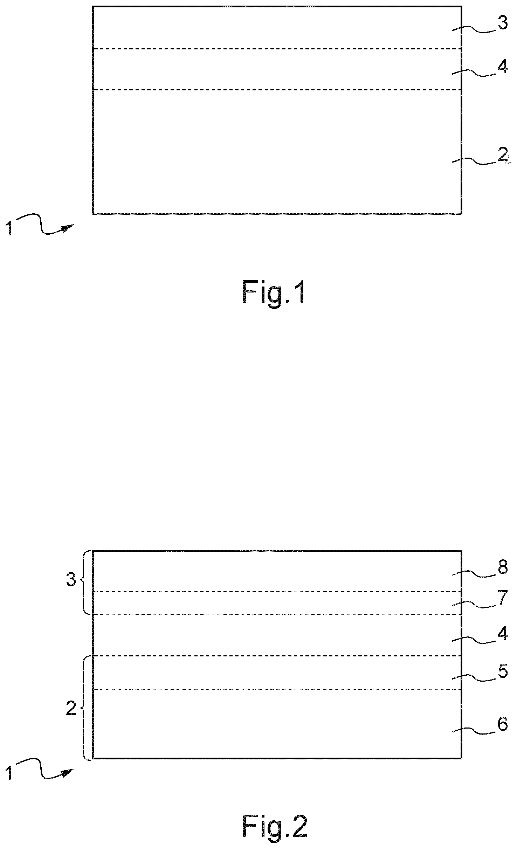

La figure 1 illustre schématiquement une coupe d'un article 1 selon un exemple de réalisation de l'invention, par exemple selon une épaisseur de l'article.

L'article 1 est par exemple une assiette, un bol, un saladier ou autre.

L'article 1 comporte principalement une base 2 et un décor 3.

La base 2 comporte au moins une céramique, par exemple une porcelaine.

Cette base 2 présente un coefficient de dilatation thermique appelé ici premier coefficient de dilatation thermique.

Le premier coefficient de dilatation thermique est ici compris entre 3,0.10⁻⁶ K⁻¹ et 6,0.10⁻⁶ K⁻¹.

La base comporte une épaisseur qui est par exemple comprise entre 1 mm et 10 mm.

Le décor 3 représente un revêtement appliqué sur la base.

Selon l'invention, l'article 1 comporte en outre un amortisseur de gradient de dilatation thermique 4.

L'amortisseur de gradient de dilatation thermique 4 est par exemple disposé au moins partiellement entre la base 2 et le décor 3.

Cet amortisseur de gradient de dilatation thermique 4 présente ici un coefficient de dilatation thermique appelé troisième coefficient de dilatation thermique.

Ce troisième coefficient de dilatation thermique est supérieur au premier coefficient de dilatation thermique de la base 2 et, selon un exemple de réalisation de l'invention, inférieur à un coefficient de dilatation thermique du décor 3.

Ainsi, par exemple, le troisième coefficient de dilatation thermique est compris entre 4,5.10⁻⁶ K⁻¹ et 7,0.10⁻⁶ K⁻¹, voire entre 5,0.10⁻⁶ K⁻¹ et 6,5.10⁻⁶ K⁻¹.

L'épaisseur de l'amortisseur de gradient de dilatation thermique 4 est comprise entre 1 µm et 20 µm, préférentiellement entre 1 µm et 10 µm, voire entre 3 µm et 8 µm.

L'amortisseur de gradient de dilatation thermique 4 comporte par exemple (les teneurs étant exprimées en pourcentage massique, noté « wt.% ») :
- de 10 à 30 wt.% d'oxyde de bore (B₂O₃);
- de 20 à 70 wt.% d'oxyde de silicium (SiO₂) ;
- de 1 à 10 wt.% d'oxyde d'aluminium (Al₂O₃) ;
- de 0 à 3 wt.% d'oxyde de titane (TiO₂) ;
- de 0 à 3 wt.% d'oxyde de calcium (CaO) ;
- de 0 à 2 wt.% d'oxyde de manganèse (MgO) ;
- de 0 à 8 wt.% d'oxyde de potassium (K₂O) ;
- de 0 à 8 wt.% d'oxyde de sodium (Na₂O) ;
- de 0 à 8 wt.% d'oxyde de zinc (ZnO) ;
- de 0 à 8 wt.% d'oxyde de zirconium (ZrO₂) ;
- de 0 à 5 wt.% d'oxyde de baryum (BaO) et
- de 0 à 5 wt.% d'oxyde de bismuth (Bi₂O₃).

La composition peut être adaptée par un homme de métier pour obtenir la valeur de coefficient de dilatation dans la plage visée.

L'amortisseur de gradient de dilatation thermique 4, avec son troisième coefficient de dilatation thermique, permet de diminuer un gradient de coefficient de dilatation thermique entre la base 2 et le décor par exemple, et ainsi de diminuer les contraintes thermomécaniques exercées entre la base 2 et le décor 3.

Dans l'exemple de réalisation de la figure 2, le décor 3 comporte au moins une couleur céramique 7 et une couverte 8.

L'au moins une couleur céramique 7 est configurée pour donner une couleur particulière au décor en fonction de sa composition.

La couleur céramique 7 comporte par exemple des oxydes métalliques et/ou des pigments céramiques mélangés à une fritte.

La couleur céramique 7 comporte généralement au moins un élément parmi les suivants : plomb (Pb), cadmium (Ca), aluminium (Al), cobalt (Co), baryum (Ba), chrome (Cr), nickel (Ni), arsenic (As), manganèse (Mn), fer (Fe), or (Au), argent (Ag).

Par exemple, l'oxyde de cobalt dans la couleur céramique donne typiquement une coloration bleue.

Généralement un article comporte plusieurs couleurs céramiques 7 de sorte à produire un décor polychrome.

L'épaisseur totale de l'au moins une couleur céramique 7, ou de toutes les couleurs céramiques s'il y en a plusieurs, est de préférence comprise entre 2 µm et 250 µm, préférentiellement entre 5 µm et 50 µm.

La couverte 8 du décor 3 est notamment configurée pour former une barrière de diffusion permettant de limiter un relargage d'éléments contenus dans la ou les couleurs céramiques 7.

La couverte 8 a de préférence une épaisseur comprise entre 1 µm et 20 µm, préférentiellement entre 1 µm et 10 µm, voire entre 3 µm et 8 µm.

La couverte 8 comporte par exemple (les teneurs étant exprimées en pourcentage massique, noté « wt.% ») :
- de 10 à 30 wt.% d'oxyde de bore (B₂O₃);
- de 20 à 70 wt.% d'oxyde de silicium (SiO₂) ;
- de 1 à 10 wt.% d'oxyde d'aluminium (Al₂O₃) ;
- de 0 à 3 wt.% d'oxyde de titane (TiO₂) ;
- de 0 à 3 wt.% d'oxyde de calcium (CaO) ;
- de 0 à 2 wt.% d'oxyde de manganèse (MgO) ;
- de 0 à 8 wt.% d'oxyde de potassium (K₂O) ;
- de 0 à 8 wt.% d'oxyde de sodium (Na₂O) ;
- de 0 à 8 wt.% d'oxyde de zinc (ZnO) ;
- de 0 à 8 wt.% d'oxyde de zirconium (ZrO₂) ;
- de 0 à 5 wt.% d'oxyde de baryum (BaO) ; et
- de 0 à 5 wt.% d'oxyde de bismuth (Bi₂O₃).

De préférence, la teneur d'au moins l'un des oxydes de la couverte est différente de la teneur de l'oxyde de l'amortisseur de gradient de dilatation thermique.

En particulier, la teneur d'oxyde de silicium (SiO₂) dans l'amortisseur de gradient de dilatation thermique 4 est possiblement inférieure à la teneur d'oxyde de silicium (SiO₂) dans la couverte 8.

La teneur d'oxyde de bore (B₂O₃)dans l'amortisseur de gradient de dilatation thermique 4 est possiblement supérieure à la teneur d'oxyde de bore (B₂O₃)dans la couverte 8.

La teneur d'oxyde d'aluminium (Al₂O₃) dans l'amortisseur de gradient de dilatation thermique 4 est possiblement supérieure à la teneur d'oxyde d'aluminium (Al₂O₃) dans la couverte 8.

Dans un exemple de réalisation non illustré, l'au moins une couleur céramique 7 et la couverte 8 sont au moins partiellement mélangées.

Dans un exemple de réalisation particulier, comme schématisé figure 2, l'au moins une couleur céramique 7 est disposée, au moins en partie, entre l'amortisseur de gradient de dilatation thermique 4 et la couverte 8.

Les contraintes thermomécaniques sont en partie responsables de l'apparition de fissures dans le décor 3, et plus particulièrement dans la barrière de diffusion formée par la couverte 8 du décor 3.

Ainsi, l'amortisseur de gradient de dilatation thermique 4 contribue à limiter des dégradations au moins dans la couverte 8 du décor 3 et ainsi limiter les risques d'apparition de fissures, ou du moins leur taille, à savoir notamment leur largeur et/ou leur profondeur.

En réduisant les fissures, l'amortisseur de gradient de dilatation thermique 4 contribue, en synergie avec la couverte 8, à limiter la libération des éléments contenus dans l'au moins une couleur céramique 7 qui s'opère via ces fissures.

Au surplus, l'amortisseur de gradient de dilatation thermique 4 permet de limiter le tressaillage du décor 3.

Dans l'exemple de réalisation de l'article 1 tel que représenté figure 2, la base 2 comporte une porcelaine 6 qui est en outre pourvue d'un émail 5.

La porcelaine 6 comporte traditionnellement un mélange de quartz, de kaolin et de feldspath.

L'émail 5 de la base 2 comporte par exemple une pluralité de minéraux tels que de la silice, du kaolin et du feldspath.

Dans le présent exemple de réalisation, l'émail 5 est disposé, au moins en partie, entre la porcelaine 6 et l'amortisseur de gradient de dilatation thermique 4.

En pratique, la porcelaine 6 et l'émail 5 de la base 2 sont souvent au moins partiellement mélangés.

Dans un exemple de réalisation, l'émail 5 et l'amortisseur de gradient de dilatation thermique 4 sont au moins partiellement mélangés.

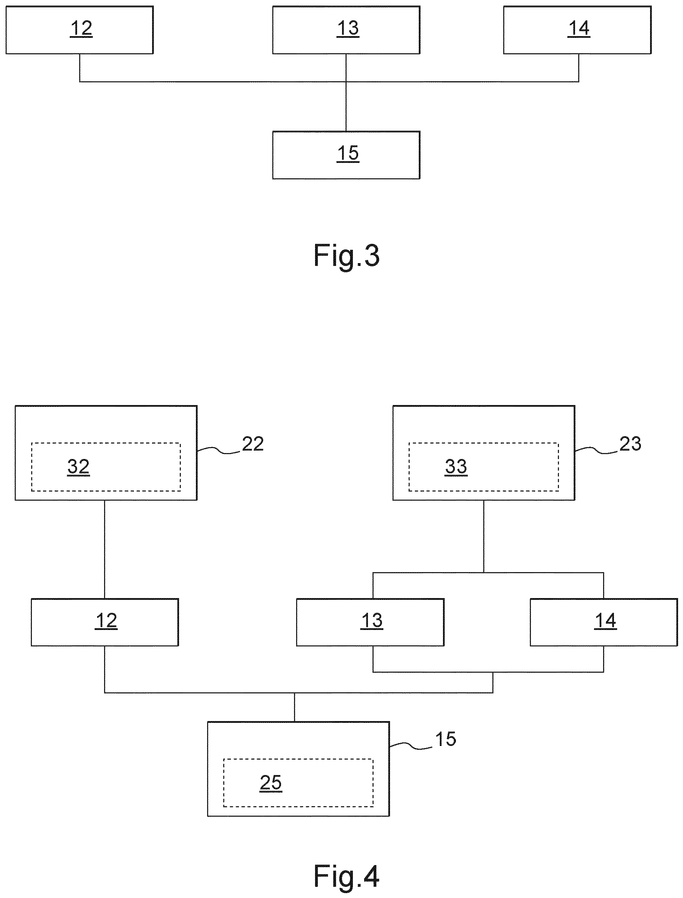

Afin de fabriquer un article 1 tel que décrit ci-dessus, un procédé selon un exemple de mise en œuvre de l'invention est schématisé par les figures 3 et 4.

Comme l'illustre la figure 3, un tel procédé de fabrication d'un article 1 comporte principalement :
- une étape 12 de fournir une base 2 au moins partiellement en porcelaine 6 ayant un coefficient de dilatation thermique appelé premier coefficient de dilatation thermique ;
- une étape 13 de fournir un décor 3 comportant au moins une couleur céramique 7 et une couverte 8 ;
- une étape 14 de fournir un amortisseur de gradient de dilatation thermique 4 ; et
- une étape 15 d'assembler la base 2, le décor 3 et l'amortisseur de gradient de dilatation thermique 4, ledit amortisseur de gradient de dilatation thermique 4 étant disposé au moins en partie entre ladite base 2 et ladite couleur céramique 7 ;
   la base ayant un coefficient de dilatation thermique appelé premier coefficient de dilatation thermique,
   ladite couleur céramique 7 ayant un coefficient de dilatation thermique appelé deuxième coefficient de dilatation thermique, le premier coefficient de dilatation thermique étant inférieur au deuxième coefficient de dilatation thermique,
   l'amortisseur de gradient de dilatation thermique 4 ayant un coefficient de dilatation thermique appelé troisième coefficient de dilatation thermique, ce troisième coefficient de dilatation thermique étant compris entre le premier coefficient de dilatation thermique et le deuxième coefficient de dilatation thermique,
   l'amortisseur de gradient de dilatation thermique 4 et le décor 3 étant configurés pour limiter l'apparition de fissures dans au moins la couverte 8.

Ainsi, l'amortisseur de gradient de dilatation thermique 4 et le décor 3 sont configurés pour limiter l'apparition de fissures, ou du moins leur taille, au moins dans la couverte 8.

Les étapes de fournir la base, fournir le décor et fournir l'amortisseur de gradient de dilatation thermique peuvent s'effectuer successivement ou simultanément.

La figure 4 présente schématiquement différentes options intéressantes pour la mise en œuvre du procédé de la figure 3.

Par exemple, le procédé de fabrication de l'article 1 comporte une étape 22 de former la base 2.

Cette étape 22 de former la base comporte possiblement une sous-étape de fournir la porcelaine et une sous-étape d'émailler cette porcelaine avec l'émail.

Cette étape 22 de former la base est typiquement antérieure à l'étape 12 de fournir la base 2.

La base 2 peut être revêtue de l'amortisseur de gradient de dilatation thermique 4.

Dans un cas particulier, l'étape 22 de former la base comporterait alors une sous-étape d'assemblage de la porcelaine émaillée avec l'amortisseur de gradient de dilatation thermique 4.

Le procédé de fabrication de l'article 1 comporte aussi possiblement une étape 23 de former le décor 3.

Cette étape 23 est typiquement antérieure à l'étape 13 de fournir le décor 3.

Par exemple, ladite étape 23 de former le décor 3 comporte une sous-étape 33 d'assemblage d'une couverte 8 et de l'au moins une couleur céramique 7.

Selon un mode de réalisation intéressant, l'étape 23 de former le décor 3 comporte une sous-étape d'assemblage de la couverte 8 et d'au moins une couleur céramique 7 avec l'amortisseur de gradient de dilatation thermique 4.

L'étape 15 d'assembler la base 2, le décor 3 et l'amortisseur de gradient de dilatation thermique 4 comporte par exemple une ou plusieurs sous-étapes 25 de cuisson de la base 2, du décor 3 et de l'amortisseur de gradient de dilatation thermique 4.

Par exemple, une température de cuisson pour une sous-étape de cuisson de la base 2 est comprise entre 1380°C et 1400°C pour une durée de 20 à 24h.

Par exemple, une température de cuisson pour une sous-étape de cuisson du décor 3 est comprise entre 700°C et 900°C.

Par exemple, une température de cuisson pour la sous-étape de cuisson l'amortisseur de gradient de dilatation thermique 4, assemblé à la base 2 et/ou au décor 3, est comprise entre 700 et 900°C.

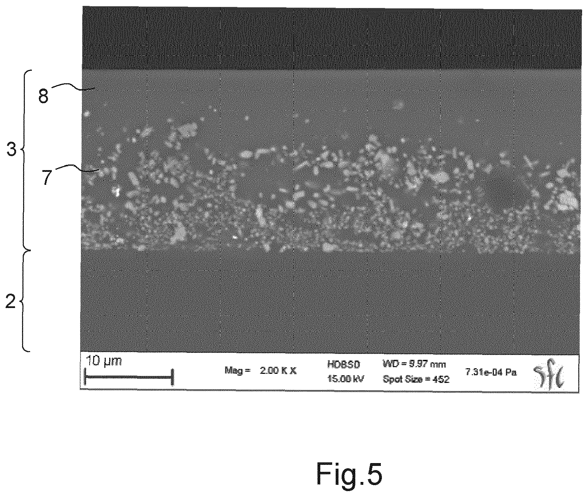

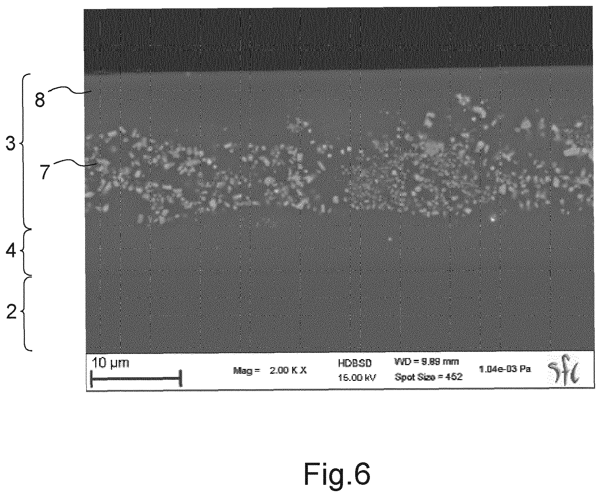

Les figures 5 et 6 représentent des clichés en électrons rétrodiffusés (contraste chimique privilégié) d'une coupe d'un article, avec et sans amortisseur de gradient de dilatation thermique.

Les articles considérés sont ici des assiettes.

L'article 1 en céramique de la figure 6 comporte : une base 2 en porcelaine 6 recouverte d'émail 5, un amortisseur de gradient de dilatation thermique 4, un décor 3 comportant des couleurs céramiques 7 et une couverte 8.

Il s'agit par exemple d'une porcelaine de Limoges.

Par exemple, la porcelaine 6 comporte ici du kaolin, du feldspath et du quartz.

Plus particulièrement, la porcelaine comporte environ 50% de kaolin, 25% de feldspath et 25% de quartz.

La porcelaine 6 subit par exemple une première cuisson entre 950°C et 1000°C.

Elle est ensuite recouverte d'émail, par exemple composé d'un mélange de silice, feldspath et de kaolin, puis la base est cuite entre 1380°C et 1400°C.

Cette base est utilisée comme support de décoration.

L'opération de décoration s'effectue par exemple via une chromolithographie céramique.

Ici, la chromolithographie est imprimée couche par couche, par sérigraphie, sur un support papier, par le biais de tissus.

Par exemple, un premier tissu comportant au moins une zone ajourée représentant un premier motif désiré est apposé sur le support papier et une pâte est étalée sur le premier tissu. Ainsi, la pâte ne rentre en contact avec le papier que dans les zones percées.

Une opération analogue peut être répétée avec au moins un deuxième tissu comportant au moins une découpe représentant un deuxième motif désiré qui serait alors apposé sur le support papier déjà recouvert par endroit de la première couleur, et une autre pâte serait ensuite étalée sur le deuxième tissu.

Ici, la chromolithographie céramique s'applique à l'amortisseur de gradient de dilatation thermique 4, au moins une des couleurs céramiques 7 et la couverte 8. Elle comprend donc au moins trois phases, pour au moins trois pâtes.

L'amortisseur de gradient de dilatation thermique est mis en œuvre à partir d'un mélange de 50% de fritte et de 50% d'un liant acrylique formant une première pâte.

Une couche de cette première pâte comportant l'amortisseur de gradient de dilatation thermique est imprimée par sérigraphie sur le support papier.

Le tissu de sérigraphie pour l'application de la première pâte comportant l'amortisseur de gradient de dilatation thermique est adapté de manière à ce qu'après cuisson l'épaisseur de l'amortisseur de gradient de dilatation thermique soit comprise entre 3 µm et 8 µm.

Par la suite, au moins une couleur céramique 7 est aussi appliquée, sous forme d'au moins une deuxième pâte, sur le tissu. Les couleurs céramiques 7 n'entrent alors en contact (indirect) avec le support papier que suivant le motif de décoration ajouré dans le tissu correspondant.

La deuxième pâte comporte ici, d'une part, des pigments de la couleur céramique 7 et une fritte, et d'autre part, un liant acrylique.

Le ratio entre les pigments et la fritte d'une part et le liant acrylique d'autre part est par exemple de l'ordre de 57:43.

Typiquement, le liant acrylique se consume pendant une chauffe.

La deuxième pâte est par exemple appliquée en une couche.

Une deuxième couleur céramique est ensuite appliquée de la même manière par une troisième pâte.

Une épaisseur totale des couleurs céramiques après cuisson est alors par exemple comprise entre 5 µm et 50 µm, voire entre 10 µm et 25 µm.

Si le décor comporte plusieurs couleurs, chaque couleur peut être appliquée de la même manière que celle décrite ci-dessus.

Eventuellement, au moins une des couleurs céramiques 7 comporte l'élément cobalt.

Possiblement, plusieurs couleurs comportant chacune du cobalt peuvent être appliquées, par exemple pour créer des dégradés de bleu.

Ensuite, une couche d'une quatrième pâte comportant la couverte, et un mélange de 50% de fritte et 50% de liant acrylique, est imprimée par sérigraphie pour atteindre de préférence 3 µm à 8 µm d'épaisseur de couverte après cuisson.

De même, typiquement, le liant acrylique se consume pendant une chauffe.

Par exemple, la couche de quatrième pâte comportant la couverte est appliquée sur les couches comportant les couleurs céramiques et l'amortisseur de gradient de dilatation thermique.

Enfin, une dernière couche, optionnelle, par exemple de polymère acrylique (covercoat) est ici imprimée par-dessus la couverte.

Après séchage, la chromolithographie céramique est obtenue.

La chromolithographie céramique est ensuite trempée dans une eau pour la détacher du support papier puis la chromolithographie céramique est positionnée et appliquée sur la base émaillée.

L'eau possiblement présente entre la surface de la base émaillée et la chromolithographie céramique est alors chassée à l'aide d'une gomme souple par exemple.

L'article est mis à sécher en étuve, puis cuit à 880°C pendant environ deux heures.

Après cuisson, l'épaisseur de l'amortisseur de gradient de dilatation thermique et du décor est comprise entre 10 µm et 25 µm.

Ainsi, dans cet exemple :
- l'amortisseur de gradient de dilatation thermique présente coefficient de dilatation thermique égal à 6,1.10⁻⁶K⁻¹ ;
- la première couleur céramique présente un coefficient de dilatation thermique égal à 6,3.10⁻⁶ K⁻¹ ;
- la deuxième couleur céramique, présente un coefficient de dilatation thermique égal à 7,3.10⁻⁶ K⁻¹ ;
- la couverte présente un coefficient de dilatation thermique de 5,4.10⁻⁶ K⁻¹ ;
- la porcelaine 6 de l'assiette a un coefficient de dilatation thermique égal à 4,6.10⁻⁶ K⁻¹ ;
- L'émail 5 a un coefficient de dilatation thermique de 4,5.10⁻⁶ K⁻¹.

Ici, les coefficients de dilatation thermique sont chacun mesurés entre 100°C et 300°C.

L'article de la figure 5 correspond à celui de la figure 6 décrit ci-dessus, mais sans amortisseur de gradient de dilatation thermique.

Les figures 5 et 6 mettent en évidence qu'en l'absence d'amortisseur de gradient de dilatation thermique, les couleurs céramiques 7 sont disposées directement entre la base 2 et la couverte 8.

En présence de l'amortisseur de gradient de dilatation thermique 4, les couleurs céramiques 7 sont disposées entre l'amortisseur de gradient de dilatation thermique 4 et la couverte 8.

Autrement dit, l'amortisseur de gradient de dilatation thermique 4, est situé sur la base 2, entre la base 2 et les couleurs céramiques 7.

Afin de démontrer l'intérêt de la présente invention sur le relargage des éléments lors de l'utilisation de l'article 1, un test de migration spécifique des éléments en contact alimentaire a été réalisé selon la norme NF EN 1388-1 sur les articles susmentionnés, avec et sans amortisseur de gradient de dilatation thermique.

Dans l'exemple repris ici, l'élément tracé est le cobalt.

Les valeurs de migration spécifique du cobalt (en ppb : « particle per bilion ») ont été mesurés par ICP-MS après trois mises en contact de 24 heures à 22°C (+/- 2°C) dans de l'acide acétique à 4% (v/v).

Ce test a montré qu'avec un amortisseur de gradient de dilatation thermique 4, 31 ppb pour le cobalt ont été mesurées alors qu'en l'absence d'amortisseur de gradient de dilatation thermique, 461 ppb pour le cobalt ont été mesurées.

La présence d'un amortisseur de gradient de dilatation thermique a alors permis de réduire de près de quinze fois le relargage de cobalt.

## Revendications

1. Article comportant une base (2) au moins partiellement en porcelaine (6), et un décor (3) comportant au moins une couleur céramique (7) et une couverte (8), ladite base (2) ayant un coefficient de dilatation thermique appelé premier coefficient de dilatation thermique, ladite couleur céramique (7) ayant un coefficient de dilatation thermique appelé deuxième coefficient de dilatation thermique, le premier coefficient de dilatation thermique étant inférieur au deuxième coefficient de dilatation thermique, l'article (1) étant **caractérisé en ce qu'**il comporte en outre un amortisseur de gradient de dilatation thermique (4) disposé au moins en partie entre ladite base (2) et ladite couleur céramique (7), ledit amortisseur de gradient de dilatation thermique (4) ayant un coefficient de dilatation thermique appelé troisième coefficient de dilatation thermique, ce troisième coefficient de dilatation thermique étant compris entre le premier coefficient de dilatation thermique et le deuxième coefficient de dilatation thermique, ledit amortisseur de gradient de dilatation thermique (4) et ledit décor (3) étant configurés pour limiter l'apparition de fissures dans au moins la couverte (8).

2. Article selon la revendication 1, **caractérisé en ce que** le troisième coefficient de dilatation thermique est compris entre le premier coefficient de dilatation thermique et un coefficient de dilatation thermique du décor.

3. Article selon l'une quelconque des revendications 1 ou 2, **caractérisé en ce que** l'au moins une couleur céramique (7) est située entre la base (2) et la couverte (8).

4. Article selon l'une quelconque des revendications 1 à 3, **caractérisé en ce que** ladite base (2) est pourvue d'émail (5), l'émail (5) étant disposé, au moins partiellement, entre la porcelaine (6) et l'amortisseur de gradient de dilatation thermique (4).

5. Article selon l'une quelconque des revendications 1 à 4, **caractérisé en ce que** le premier coefficient de dilatation thermique de la base (2) est compris entre 3,0.10⁻⁶ K⁻¹ et 6,0.10⁻⁶ K⁻¹.

6. Article selon l'une quelconque des revendications 1 à 5, **caractérisé en ce que** le deuxième coefficient de dilatation thermique de ladite couleur céramique (7) est compris entre 5,0.10⁻⁶ K⁻¹ et 11,0.10⁻⁶ K⁻¹.

7. Article selon l'une quelconque des revendications 1 à 6, le troisième coefficient de dilatation thermique est compris entre 4,5.10⁻⁶ K⁻¹ et 7,0.10⁻⁶ K⁻¹.

8. Article selon l'une quelconque des revendications 1 à 7, **caractérisé en ce que** l'au moins une couleur céramique (7) comporte au moins un élément parmi les suivants : plomb (Pb), cadmium (Ca), aluminium (Al), cobalt (Co), baryum (Ba), chrome (Cr), nickel (Ni), arsenic (As), manganèse (Mn), fer (Fe), or (Au), argent (Ag).

9. Article selon l'une quelconque des revendications 1 à 8, **caractérisé en ce que** l'amortisseur de gradient de dilatation thermique (4) comporte :
- de 10 à 30 wt.% d'oxyde de bore (B₂O₃);
- de 20 à 70 wt.% d'oxyde de silicium (SiO₂) ;
- de 1 à 10 wt.% d'oxyde d'aluminium (Al₂O₃) ;
- de 0 à 3 wt.% d'oxyde de titane (TiO₂) ;
- de 0 à 3 wt.% d'oxyde de calcium (CaO) ;
- de 0 à 2 wt.% d'oxyde de manganèse (MgO) ;
- de 0 à 8 wt.% d'oxyde de potassium (K₂O) ;
- de 0 à 8 wt.% d'oxyde de sodium (Na₂O) ;
- de 0 à 8 wt.% d'oxyde de zinc (ZnO) ;
- de 0 à 8 wt.% d'oxyde de zirconium (ZrO₂) ;
- de 0 à 5 wt.% d'oxyde de baryum (BaO) et
- de 0 à 5 wt.% d'oxyde de bismuth (Bi₂O₃).

10. Article selon la revendication 9, **caractérisé en ce que** la couverte (8) comporte :
- de 10 à 30 wt.% d'oxyde de bore (B₂O₃);
- de 20 à 70 wt.% d'oxyde de silicium (SiO₂) ;
- de 1 à 10 wt.% d'oxyde d'aluminium (Al₂O₃) ;
- de 0 à 3 wt.% d'oxyde de titane (TiO₂) ;
- de 0 à 3 wt.% d'oxyde de calcium (CaO) ;
- de 0 à 2 wt.% d'oxyde de manganèse (MgO) ;
- de 0 à 8 wt.% d'oxyde de potassium (K₂O) ;
- de 0 à 8 wt.% d'oxyde de sodium (Na₂O) ;
- de 0 à 8 wt.% d'oxyde de zinc (ZnO) ;
- de 0 à 8 wt.% d'oxyde de zirconium (ZrO₂) ;
- de 0 à 5 wt.% d'oxyde de baryum (BaO) ; et
- de 0 à 5% d'oxyde de bismuth (Bi₂O₃) ;
la teneur d'au moins l'un des oxydes de la couverte étant différente de la teneur de l'oxyde de l'amortisseur de gradient de dilatation thermique.

11. Article selon la revendication 10, **caractérisé en ce que** la teneur d'oxyde de silicium (SiO₂) dans l'amortisseur de gradient de dilatation thermique (4) est inférieure à la teneur d'oxyde de silicium (SiO₂) dans la couverte (8).

12. Article selon l'une quelconque des revendications 10 ou 11, **caractérisé en ce que** la teneur d'oxyde de bore (B₂O₃) dans l'amortisseur de gradient de dilatation thermique (4) est supérieure à la teneur d'oxyde de bore (B₂O₃) dans la couverte (8).

13. Article selon l'une quelconque des revendications 10 à 12, **caractérisé en ce que** la teneur d'oxyde d'aluminium (Al₂O₃) dans l'amortisseur de gradient de dilatation thermique (4) est supérieure à la teneur d'oxyde d'aluminium (Al₂O₃) dans la couverte (8).

14. Procédé de fabrication d'un article selon l'une quelconque des revendications 1 à 13, comportant :
- une étape (12) de fournir une base (2) au moins partiellement en porcelaine (6) ;
- une étape (13) de fournir un décor (3) comportant au moins une couleur céramique (7) et une couverte (8) ;
- une étape (14) de fournir un amortisseur de gradient de dilatation thermique (4) ; et
- une étape (15) d'assembler la base (2), le décor (3) et l'amortisseur de gradient de dilatation thermique (4) ledit amortisseur de gradient de dilatation thermique (4) étant disposé au moins en partie entre ladite base (2) et ladite couleur céramique (7),
la base (2) ayant un coefficient de dilatation thermique appelé premier coefficient de dilatation thermique,
ladite couleur céramique (7) ayant un coefficient de dilatation thermique appelé deuxième coefficient de dilatation thermique, le premier coefficient de dilatation thermique étant inférieur au deuxième coefficient de dilatation thermique,
l'amortisseur de gradient de dilatation thermique (4) ayant un coefficient de dilatation thermique appelé troisième coefficient de dilatation thermique, ce troisième coefficient de dilatation thermique étant compris entre le premier coefficient de dilatation thermique et le deuxième coefficient de dilatation thermique,
l'amortisseur de gradient de dilatation thermique (4) et le décor (3) étant configurés pour limiter l'apparition de fissures dans au moins la couverte (8).
